# EUROPEAN PATENT APPLICATION

(11) **EP 4 386 105 A1**
(43) Date of publication of application: **19.06.2024**
(21) Application number: 22860598.6
(22) Date of filing: 25.08.2022
(51) Int. Cl.: C22C 38/52, B22F 3/12

(54) **STEEL, STEEL STRUCTURAL MEMBER, ELECTRONIC DEVICE AND PREPARATION METHOD FOR STEEL STRUCTURAL MEMBER**

(30) Priority: 27.08.2021 CN 202110994346
(71) Applicant: Huawei Technologies Co., Ltd., Shenzhen, Guangdong 518129 (CN)
(72) Inventor: XU, Xiaoming, Shenzhen, Guangdong 518129 (CN); CAI, Ming, Shenzhen, Guangdong 518129 (CN); LI, Longyu, Shenzhen, Guangdong 518129 (CN)
(74) Representative: Epping - Hermann - Fischer
(86) International application number: PCT/CN2022/114866
(87) International publication number: WO 2023/025252

(57) **Abstract**

This application provides a steel, including: Fe, with a weight percentage of ≥ 60.67 wt%; Cr, with a weight percentage of 8.01 wt% to 8.99 wt%; Ni, with a weight percentage of 6 wt% to 7 wt%; Co, with a weight percentage of 15.01 wt% to 15.99 wt%; Mo, with a weight percentage of 5.5 wt% to 6.5 wt%; Nb, with a weight percentage of ≤ 0.5 wt%; O, with a weight percentage of ≤ 0.3 wt%; and C, with a weight percentage of ≤ 0.05 wt%. This application further provides a steel structural part to which the steel is used, a steel structural part preparation method, and an electronic device. The steel in this application has high strength and high ductility.

## Description

### CROSS-REFERENCE TO RELATED APPLICATIONS

This application claims priority to Chinese Patent Application No. 202110994346.8, filed with the China National Intellectual Property Administration on August 27, 2021 and entitled "STEEL, STEEL STRUCTURAL PART, ELECTRONIC DEVICE, AND STEEL STRUCTURAL PART PREPARATION METHOD", which is incorporated herein by reference in its entirety.

### TECHNICAL FIELD

This application relates to the field of steel technologies, and in particular, to a steel, a steel structural part, an electronic device, and a steel structural part preparation method.

### BACKGROUND

Currently, consumer electronic products, such as mobile phones, use a large quantity of metal injection molding (Metal injection Molding, MIM) complex structural parts, and stainless steel materials are most widely used. MIM is used for mixing metal powders with binders, granulating a mixed material, and injecting mixed material obtained through granulating into a mold to obtain a required shape. However, because complexity of structural parts and a quantity of used structural parts increase sharply, a reliability problem caused by insufficient stainless steel strength is especially prominent. For example, a foldable mobile phone in the industry uses a rotating shaft, namely, a hinge part, that is made of MIM stainless steel. Due to insufficient strength of the rotating shaft, it is difficult to meet reliability and life requirements. Although conventional structural steels have robust strength, production of complex precise structural parts requires a large quantity of computerized numerical control (Computerized Numerical Control, CNC) precise mechanical machining processes, recycled materials, and energy consumption, resulting in high costs.

According to a first aspect, an embodiment of this application provides a steel, including:
Fe: with a weight percentage of ≥ 60.67 wt%;
Cr: with a weight percentage of 8.01 wt% to 8.99 wt%;
Ni: with a weight percentage of 6 wt% to 7 wt%;
Co: with a weight percentage of 15.01 wt% to 15.99 wt%;
Mo: with a weight percentage of 5.5 wt% to 6.5 wt%;
Nb: with a weight percentage of ≤ 0.5 wt%;
O: with a weight percentage of ≤ 0.3 wt%; and
C: with a weight percentage of ≤ 0.05 wt%.

The Cr element plays a decisive role in corrosion inhibition of the steel. The Ni element is an important austenite stabilization element in the steel and also an important toughening element in the steel. The Co element promotes austenite formation in the steel, which is favorable for toughness of the steel. In addition, the Co element may delay generation of new martensite dislocation substructures, maintain high dislocation density of a martensite lath, and promote formation of precipitated phases. In this application, the Co element is used as a very important strengthening element and promotes formation of precipitated phases. Co may reduce a size of a precipitated phase R in a maraging stainless steel, and increase a quantity of precipitated phases. To be specific, in a specific range, with an increase of Co content, precipitated phases in the maraging stainless steel in a temporal state are distributed more diffusely, which can effectively enhance a precipitation strengthening effect of the precipitated phases. Smaller and more diffused precipitated phases result in higher toughness and strength of a material. The Mo element in the steel promotes formation of precipitated phases and improve matrix strength. The O element is generally considered as a harmful element in the steel. In this application, the oxygen element is controlled to a specific content (a weight percentage of ≤ 0.3 wt%) to improve strength. Nb may further form a small quantity of intermetallic compounds with Ni, to improve strength and toughness of a steel material. The C element is one of the most common elements in the steel and one of austenite stabilization elements. In addition, the C element can also improve hardenability of the steel. A small amount of C solidified in the matrix can improve strength and toughness. The steel in this application has high strength and high ductility.

In an implementation of this application, the steel further includes Si, and a weight percentage of Si is ≤ 0.5 wt%.

In an implementation of this application, the steel further includes Mn, and a weight percentage of Mn is ≤ 0.5 wt%.

In an implementation of this application, the steel further includes B, and a weight percentage of B is ≤ 0.05 wt%.

In an implementation of this application, a weight percentage of Cr in the steel is 8.2 wt% to 8.8 wt%.

In an implementation of this application, a weight percentage of Ni in the steel is 6.2 wt% to 6.8 wt%.

In an implementation of this application, a weight percentage of Co in the steel is 15.2 wt% to 15.8 wt%.

In an implementation of this application, a weight percentage of Mo in the steel is 5.7 wt% to 6.3 wt%.

In an implementation of this application, a weight percentage of Nb in the steel is 0.25 wt% to 0.45 wt%.

In an implementation of this application, a weight percentage of O in the steel is 0.01 wt% to 0.2 wt%.

In an implementation of this application, a weight percentage of C in the steel is 0.01 wt% to 0.035 wt%.

In an implementation of this application, the steel further includes another element. The another element includes one or more of nitrogen, rhenium, copper, aluminum, titanium, sulfur, phosphorus, hydrogen, zirconium, magnesium, tantalum, calcium, vanadium, zinc, and rare earth metal, and a mass percentage of the another element is ≤ 1%.

In an implementation of this application, components of the steel include: Cr: 8.43 wt%; Ni: 6.51 wt%; Co: 15.5 wt%; Mo: 6.02 wt%; Nb: 0.29 wt%; B: 0.01 wt%; Si: 0.2 wt%; Mn: 0.12 wt%; O: 0.003 wt%; C: 0.046 wt%; and the remaining is Fe.

In an implementation of this application, the components of the steel include: Cr: 8.43 wt%; Ni: 6.56 wt%; Co: 15.59 wt%; Mo: 5.85 wt%; Nb: 0.46 wt%; Si: 0.43 wt%; Mn: 0.016 wt%; O: 0.28 wt%; C: 0.046 wt%; and the remaining is Fe.

According to a second aspect, an embodiment of this application provides a steel structural part. A material used by the steel structural part includes the steel according to the first aspect of embodiments of this application.

According to a third aspect, an embodiment of this application provides a steel structural part preparation method, including:
providing powders, where the powder includes:
   Fe: with a weight percentage of ≥ 60.67 wt%,
   Cr: with a weight percentage of 8.01 wt% to 8.99 wt%,
   Ni: with a weight percentage of 6 wt% to 7 wt%,
   Co: with a weight percentage of 15.01 wt% to 15.99 wt%,
   Mo: with a weight percentage of 5.5 wt% to 6.5 wt%, and Nb: with a weight percentage of ≤ 0.5 wt%;
   mixing the powders with binders and molding the powders and the binders to a raw billet;
   sintering the raw billet to form a sintered billet; and
   performing heat treatment on the sintered billet.

The steel structural part with specific component ratios in this application may be obtained by using the foregoing powders through a metal injection molding process. In addition, a three-dimensional complex and precise steel structural part can be effectively obtained at a time. Compared with conventional mechanical machining, the metal injection molding process improves production efficiency for preparing a complex and precise steel material, reduces costs for preparing a steel material, and is favorable for large-scale steel materials production. In addition, the steel has high strength and high ductility.

In an implementation of this application, the mixing the powders with binders and molding the powders and binders to a raw billet includes:
mixing the powders and the binders to form paste feeds;
granulating the paste feeds to form feed particles; and
molding the feed particles into the raw billet through injection.

Forming the raw billet of the steel structural part through injection molding not only ensures high molding efficiency and low costs, but also can effectively obtain the raw billet of the three-dimensional complex and precise steel structural part at a time, thereby improving production efficiency for preparing a complex and precise part. The powders are mixed with binders, and the powders have specific fluidity. This reduces or avoids a defect such as a crack or corner tearing of the raw billet. In addition, the powders are mixed with binders, the formed raw billet has specific strength, and a shape of the raw billet can be maintained after the raw billet is removed from a mold cavity. This reduces or avoids deformation of the raw billet and improves a yield.

In an implementation of this application, before the sintering the raw billet, the method further includes: debinding the raw billet to remove the binders in the raw billet.

In some embodiments, the binders in the raw billet are removed by using catalytic debinding.

Removing the binders by using catalytic debinding is to debind the raw billet in corresponding atmosphere and decompose the binders to remove the binders by taking an advantage of rapid degradation of a polymer in specific atmosphere. Removing the binders in the raw billet by using catalytic debinding can perform debinding quickly without defects and improve debinding efficiency, thereby improving efficiency for preparing a steel material.

In an implementation of this application, the powder further includes Si, and a weight percentage of Si is ≤ 0.5 wt%; the powder further includes Mn, and a weight percentage of Mn is ≤ 0.5 wt%; and the powder further includes B, and a weight percentage of B is ≤ 0.05 wt%.

In an implementation of this application, the performing heat treatment on the sintered billet includes: performing solution treatment on the sintered billet; and performing aging treatment on the sintered billet for which solution treatment is performed.

Heat treatment of solution treatment and aging treatment may further strengthen properties of the steel structural part.

According to a fourth aspect, an embodiment of this application provides a steel structural part, which is prepared by using the preparation method according to the third aspect of embodiments of this application.

According to a fifth aspect, an embodiment of this application provides an electronic device, including the steel structural part according to the second aspect or the fourth aspect of embodiments of this application.

The steel structural part is used in the electronic device, which reduces risks that the steel structural part in the electronic device is fractured when the electronic device falls from a height and deforms in a use process, thereby improving quality of the electronic device. In addition, the steel structural part has high strength, and reliability of the steel structural part does not need to be ensured by increasing a thickness of the steel structural part, thereby facilitating miniaturization of the electronic device. In addition, the MIM technology is used to prepare required precise and complex structural parts. This greatly improves freedom of product structure design.

In an implementation of this application, the electronic device further includes a flexible display and a folding apparatus configured to carry the flexible display. The folding apparatus is configured to drive the flexible display to deform, and the folding apparatus includes the steel structural part.

In an implementation of this application, the folding apparatus includes a rotating shaft, and the rotating shaft is the steel structural part.

### BRIEF DESCRIPTION OF DRAWINGS

FIG. 1 is a schematic diagram of a structure of an electronic device according to an embodiment of this application;
FIG. 2A and FIG. 2B are metallographic diagrams of a steel structural part before corrosion and after corrosion, respectively according to an embodiment of this application; and
FIG. 3 is a schematic flowchart of a steel structural part preparation method according to an embodiment of this application.

### Description of reference signs of main parts:

| | |
|---|---|
| Electronic device | 100 |
| Housing | 10 |
| Flexible display | 20 |
| Folding apparatus | 30 |

### DESCRIPTION OF EMBODIMENTS

The following describes embodiments of this application with reference to accompanying drawings in embodiments of this application. Unless otherwise specified, a parameter range involved in this application includes an endpoint value.

Structural components and parts of consumer electronic products are usually small and precise parts, have complex three-dimensional structures, and need to meet requirements for smooth mechanism operation and structure reliability. Therefore, there are multi-dimensional requirements for materials. A preparation process is required to facilitate formation of precise and complex structures to provide greater freedom of structure design. In addition, there are high requirements for strength (such as yield strength and tensile strength) and toughness (such as elongation rate) of materials.

The electronic device in embodiments of this application includes a steel structural part that has high strength and high toughness. The electronic device may be a consumer electronic product, for example, a mobile phone, a tablet computer, an e-reader, a notebook computer, a vehicle-mounted device, a wearable device, or a rollable and foldable electronic paper.

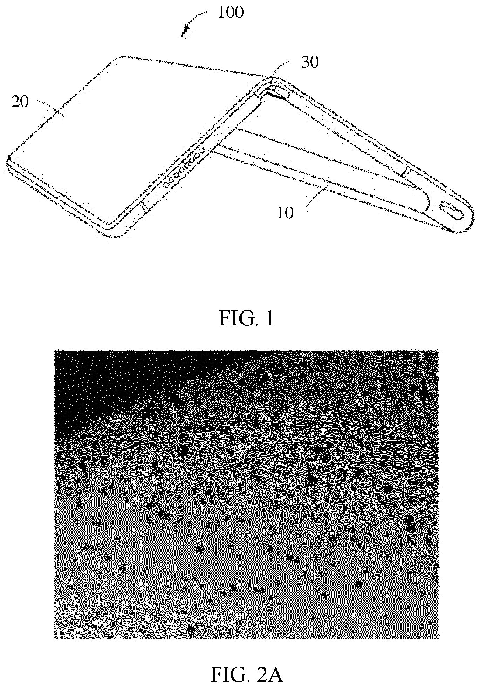

Refer to FIG. 1. An example in which an electronic device 100 is a foldable mobile phone is used for description. The foldable mobile phone shown in FIG. 1 is in a semi-unfolded state. As shown in FIG. 1, the electronic device 100 includes a housing 10, a flexible display 20, and a folding apparatus 30. The folding apparatus 30 is disposed on the housing 10. The flexible display 20 is configured to display an image. The folding apparatus 30 is configured to drive the flexible display 20 to deform. For example, the folding apparatus 30 is connected to the flexible display 20, and is configured to drive the flexible display 20 to fold or unfold. The folding apparatus 30 includes a rotating shaft, and the rotating shaft can rotate under driving force, to drive the flexible display 20 to bend or unfold. When the electronic device 100 is in an unfolded state, the electronic device 100 is in the same place as the flexible display 20. As shown in FIG. 1, in another state, the electronic device 100 is in a state that is not fully unfolded. In this case, some structures of the flexible display 20 and the other structures of the flexible display 20 are located in different planes. The electronic device 100 provided in this application may be folded or unfolded based on different usage scenarios, and the electronic device 100 presents different forms, to meet different requirements of a user.

Types of the flexible display 20 and the folding apparatus 30 are not limited in this application. A person skilled in the art can select the types of the flexible display 20 and the folding apparatus 30 according to an actual requirement. The flexible display 20 is made of a soft material, and is a deformable and bendable panel having a display function. Shapes and thicknesses of the flexible display 20 and the folding apparatus 30 in FIG. 1 are merely examples, and are not limited in this application.

In this application, the folding apparatus 30 includes a steel structural part. The steel structural part is a structural part having a specific appearance shape. For example, the steel structural part may be but is not limited to a structural part that is subject to complex force, such as a rotating shaft, a gear, a sliding block, a sliding slot, or a connecting rod in the folding apparatus 30. The steel structural part has specific strength. This ensures mechanical strength of the folding apparatus 30 and avoids deformation of the folding apparatus 30 due to force, thereby ensuring reliability of the electronic device 100. The steel structural part is made of a steel material. The steel structural part may be obtained through an MIM process, but is not limited thereto.

In the conventional technology, a steel structural part in a folding apparatus is prone to deform or even has a risk of fracture when the steel structural part is subject to large force. This causes the folding apparatus to be stuck, and consequently, an electronic device cannot switch between folding and unfolding. In addition, the fractured steel structural part may against a flexible display, which affects image display of the flexible display, thereby affecting quality of the electronic device. For example, in the conventional technology, a stainless steel material used in the folding apparatus has insufficient strength and poor toughness. When the electronic device falls at a height, the steel structural part in the folding apparatus is easily fractured, which affects service life of the electronic device.

Based on the risk of fracture of the steel structural part in the electronic device in the conventional technology, this application provides a steel structural part with high strength and a high elongation rate, to reduce risks of fracture and failure of the steel structural part in a falling process of the electronic device 100. In addition, the steel structural part has high strength, and reliability of the steel structural part does not need to be ensured by increasing a thickness. This facilitates miniaturization of the steel structural part, thereby facilitating miniaturization of the electronic device 100. For example, a yield strength of the steel structural part provided in this application reaches 1.9 GPa, and an elongation rate reaches 5%.

Yield strength is a yield limit when a yield phenomenon occurs on a metal material, namely, stress that resists microplastic deformation. It may be understood that high yield strength of the steel structural part indicates high mechanical strength of the steel structural part. The elongation rate (δ) is an index that describes plastic properties of a material. The elongation rate is a percentage of a total deformation length of a sample after tensile fracture to an original length.

In this embodiment of this application, an example in which the steel structural part is a rotating shaft of the electronic device 100 (a foldable mobile phone) is used for description. In another embodiment, the steel structural part may alternatively be another structural part with a complex shape in the electronic device 100, for example, a gear, a wear-resistant part with an arc structure, or a support part that needs to be bent. This is not limited in this application.

It may be understood that the steel structural part may alternatively be a middle frame or a rear cover of the electronic device 100. This is not limited in this application. For example, the steel structural part is the middle frame of the electronic device 100. Due to high yield strength and difficult to deform of the steel structural part, the middle frame of the electronic device 100 is not easily deformed when the electronic device 100 falls from a height. This reduces a risk of appearance deformation of the electronic device 100, thereby helping ensure a beautiful appearance of the electronic device 100.

In this application, the steel structural part is a steel, and the steel includes:
Fe: with a weight percentage of ≥ 60.67 wt%;
Cr: with a weight percentage of 8.01 wt% to 8.99 wt%;
Ni: with a weight percentage of 6 wt% to 7 wt%;
Co: with a weight percentage of 15.01 wt% to 15.99 wt%;
Mo: with a weight percentage of 5.5 wt% to 6.5 wt%;
Nb: with a weight percentage of ≤ 0.5 wt%;
O: with a weight percentage of ≤ 0.3 wt%; and
C: with a weight percentage of ≤ 0.05 wt%.

In some embodiments, a weight percentage of Fe in the steel is ≤ 65.48 wt%. In some embodiments, a weight percentage of Cr in the steel is 8.2 wt% to 8.8 wt%. In some embodiments, a weight percentage of Ni in the steel is 6.2 wt% to 6.8 wt%. In some embodiments, a weight percentage of Co in the steel is 15.2 wt% to 15.8 wt%. In some embodiments, a weight percentage of Mo in the steel is 5.7 wt% to 6.3 wt%. In some embodiments, a weight percentage of Nb in the steel is 0.25 wt% to 0.45 wt%. In some embodiments, a weight percentage of O in the steel is 0.01 wt% to 0.2 wt%. In some embodiments, a weight percentage of C in the steel is 0.01 wt% to 0.035 wt%.

In some embodiments, the steel further includes Si, and a weight percentage of Si is ≤ 0.5 wt%, preferably ≤ 0.25 wt%.

In some embodiments, the steel further includes Mn, and a weight percentage of Mn is ≤ 0.5 wt%, preferably ≤ 0.25 wt%.

In some embodiments, the steel further includes B, and a weight percentage of B is ≤ 0.05 wt%.

In some embodiments, the steel may further include another element, and the another element includes one or more of nitrogen, rhenium, copper, aluminum, titanium, sulfur, phosphorus, hydrogen, zirconium, magnesium, tantalum, calcium, vanadium, zinc, and rare earth metal, and a mass percentage of the another element is ≤ 1%.

It may be understood that the steel may further include another inevitable impurity element, but content of the impurity element is very low and may be ignored.

In an embodiment, components of the steel include: Cr: 8.43 wt%; Ni: 6.51 wt%; Co: 15.5 wt%; Mo: 6.02 wt%; Nb: 0.29 wt%; B: 0.01 wt%; Si: 0.2 wt%; Mn: 0.12 wt%; O: 0.003 wt%; C: 0.046 wt%; and the remaining is Fe.

In an embodiment, the components of the steel include: Cr: 8.43 wt%; Ni: 6.56 wt%; Co: 15.59 wt%; Mo: 5.85 wt%; Nb: 0.46 wt%; Si: 0.43 wt%; Mn: 0.016 wt%; O: 0.28 wt%; C: 0.046 wt%; and the remaining is Fe.

The Cr element plays a decisive role in corrosion inhibition of the steel, but Cr is a strong ferrite stabilization element. When Cr content is too high, a ferrite is formed in the steel matrix and steel strength is reduced. The ferrite is iron or a solid solution in which one or more other elements (for example, carbon) are solidified in a body-centered cubic lattice of iron. The ferrite has good plasticity and toughness, but has low strength and hardness.

The Ni element is an important austenite stabilization element in the steel and also an important toughening element in the steel. Ni can improve an ability of martensite to resist cleavage fracture and ensure that the steel has robust toughness. In addition, existence of excessive Ni inhibits austenite-martensite transformation during quenching. Austenite is a solid solution formed by solidifying one or more other elements (such as carbon) in γ-Fe, and is also referred to as austenitic iron or γ-Fe. Austenite is of a face-centered cubic structure, and is of a densest lattice structure, and has high density. Austenite has good plasticity, low strength, and specific toughness, and is not ferromagnetic.

The Co element promotes austenite formation in the steel, which is favorable for toughness of the steel. In addition, the Co element may delay recovery of a martensite dislocation substructure, maintain high dislocation density of a martensite lath, and promote formation of precipitated phases. Co is an austenite stabilization element. When Co content is excessive, stable austenite is formed in an alloy, and austenite cannot be transformed into martensite in a quenching process, which prevents the matrix from obtaining high strength.

In this application, the Co element is used as a very important strengthening element and promotes formation of precipitated phases. Co may reduce a size of a precipitated phase R in a maraging stainless steel, and increase a quantity of precipitated phases. To be specific, in a specific range, with an increase of Co content, precipitated phases in the maraging stainless steel in a temporal state are distributed more diffusely (distributed more evenly), which can effectively enhance a precipitation strengthening effect of the precipitated phases. Smaller and more diffused precipitated phases result in higher toughness and strength of a material. In addition, Co is an austenite stabilization element. When the Co content reaches a specific range, a γ phase region is significantly expanded. As a result, a proportion of residual austenite in a material is high at room temperature, and strength decreases significantly. Therefore, in this application, the Co content is controlled to a specific range of 15.01 wt% to 15.99 wt%, to ensure strength and toughness of the steel.

The Mo element in the steel promotes formation of precipitated phases and improve matrix strength. In addition, Mo is a ferrite stabilization element. Excessive Mo causes too much austenite to be generated in the alloy. Austenite is transformed into a stable ferrite, resulting in reduction in matrix strength.

The Nb element may be solidified in the steel to cause crystal lattice distortion, thereby ensuring solid solution strengthening. In addition, the Nb element is also a carbide formation element and has functions of grain refinement and precipitation hardening. In this application, Nb may further form a small quantity of intermetallic compounds with Ni, to improve strength and toughness of a steel material.

The Si element may be used as a deoxidant for melting a liquid steel in a metal powder preparation process. In addition, the Si element can improve fluidity of the liquid steel. In addition, a small amount of silicon is retained in the matrix, and may exist in a form of an oxide inclusion to improve matrix strength. In this application, Si content is controlled to be ≤ 0.5 wt%.

The Mn element has effects of deoxidization and desulfurization in the steel. In the powder preparation process, oxygen and sulfur in the liquid steel may be removed. In addition, the Mn element is also an element that ensures hardenability. Similar to a function of the Si element, when Mn content is excessive, toughness of the steel is significantly reduced. Therefore, in this application, the Mn content is controlled to be ≤ 0.5 wt%.

The C element is one of the most common elements in the steel and one of austenite stabilization elements. In addition, the C element can also improve hardenability of the steel. A small amount of C solidified in the steel matrix can improve strength and toughness. Therefore, in this application, C content is controlled to be ≤ 0.05 wt%.

The B element may be used as a deoxidant in the steel and can refine grains.

The O element generally forms some oxide inclusions in the steel, and is generally considered as a harmful element. However, in this application, the oxygen element controlled to a specific content (a weight percentage of ≤ 0.3 wt%) may be combined with a small amount of Si and distributed in the steel matrix, to improve strength. In general steel materials, even if Si is not actively added, a small amount of Si exists, and Si is preferentially combined with O.

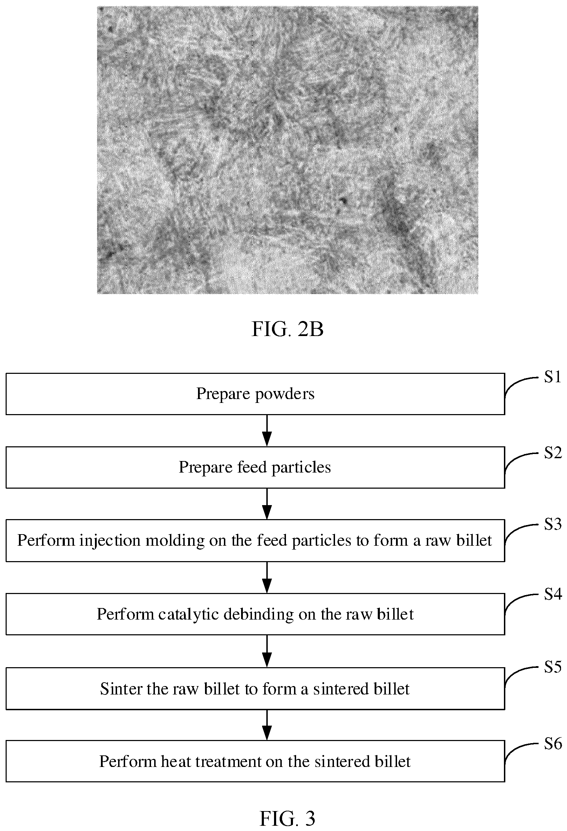

The steel in this application is sampled. After the sample is ground and polished, a metallographic diagram before the sample is corroded by using a specific acidic corrosive agent is shown in FIG. 2A. FIG. 2A presents a porosity feature of the sample. A metallographic diagram after the sample is corroded by using a specific acidic corrosive agent is shown in FIG. 2B. Figure 2B shows the existence of a martensite lath.

The steel structural part may be formed by using powders through a metal injection molding process. As shown in FIG. 3, the steel structural part preparation method specifically includes the following steps.

S1: Prepare powders, where the powder includes the following chemical components:
Fe: with a weight percentage of ≥ 60.67 wt%;
Cr: with a weight percentage of 8.01 wt% to 8.99 wt%;
Ni: with a weight percentage of 6 wt% to 7 wt%;
Co: with a weight percentage of 15.01 wt% to 15.99 wt%;
Mo: with a weight percentage of 5.5 wt% to 6.5 wt%; and Nb: with a weight percentage of ≤ 0.5 wt%;

In this embodiment of this application, the powders may be prepared by using an atomization method, a reduction method, a mechanical grinding method, or the like. A particle diameter D50 of the powders is 3 µm to 18 µm (the particle diameter of 50% particles is 3 µm to 18 µm), and may be adjusted accordingly according to a requirement.

The powders may be generally prepared in two ways: one is that elements are pre-alloyed and then prepared to powders, where each element exists in an alloy manner; and the other is that a plurality of monomer elements or a plurality of compounds are mixed by proportion adjustment, and are still represented as a plurality of monomer elements or a plurality of compounds. In this embodiment of this application, oxygen (O) may exist in a form of silicon oxide, chromium oxide, or the like, or an oxygen atom exists in an interstice of a metal atom (for example, Fe) in a microcosmic manner.

In some embodiments, a weight percentage of Cr in the powder is 8.2 wt% to 8.8 wt%. In some embodiments, a weight percentage of Ni in the powder is 6.2 wt% to 6.8 wt%. In some embodiments, a weight percentage of Co in the powder is 15.2 wt% to 15.8 wt%. In some embodiments, a weight percentage of Mo in the powder is 5.7 wt% to 6.3 wt%. In some embodiments, a weight percentage of Nb in the powder is 0.25 wt% to 0.45 wt%.

In some embodiments, the powder further includes Si, and a weight percentage of Si is ≤ 0.5 wt%, preferably ≤ 0.25 wt%; the powder further includes Mn, and a weight percentage of Mn is ≤ 0.5 wt%, preferably ≤ 0.25 wt%; and the powder further includes B, and a weight percentage of B is ≤ 0.05 wt%.

S2: Prepare feed particles: Mix the powders in step S1 with binders, and perform granulation to form feed particles.

Mix the powders in step S1 with binders based on a specific volume ratio, and then add the powders and the binders to an internal mixer to form evenly mixed paste feeds. Move the paste feeds into a granulator. A screw of the granulator extrudes gradually cooled feeds through a die head, and a rotating blade cuts feeds in a stripe shape into cylindrical particles with a length of 2 mm to 3 mm, so that feed particles that can be directly used for molding are obtained. The binders are binders dedicated to alloy powders, and are usually organic binders. The binders are used to bond with the powders to facilitate subsequent injection molding.

S3: Perform injection molding on the feed particles in step S2 to form a raw billet.

Add the feed particles in step S2 to a hopper of an injection molding machine, and perform injection molding under specific temperature (for example, a molding temperature is 170°C to 220°C) and pressure conditions (for example, a molding pressure is 150 MPa to 200 MPa) to obtain the raw billet.

S4: Debind the raw billet.

Horizontally place the raw billet on an aluminum oxide ceramic plate and place the plate into a catalytic debinding furnace, and perform catalytic debinding at a specific temperature (the temperature is set to 110°C to 130°C, a fuming nitric acid flux is 0.5 g/min to 3.5 g/min, and duration is 2 to 4 hours) to remove a part of binders in the raw billet.

S5: Sinter the raw billet to form a sintered billet.

Place the raw billet for which catalytic debinding is performed with the aluminum oxide ceramic plate into a sintering furnace and perform sintering under specific temperature and atmosphere conditions (Ar, H₂, or vacuum).

Sintering is a process of transforming powder materials (the powders in this application) into dense bodies, and enabling molecules or atoms in a solid state to obtain robust energy for migration by heating, so that the powder bodies generate particles and are bonded, generate strength, and cause densification and recrystallization. For example, in this embodiment of this application, sintering may be heating to 1260°C to 1370°C and heat preservation for 1.5 to 8 hours. During sintering, the binders are removed.

S6: Perform heat treatment on the sintered billet.

Perform solution treatment (for example, the temperature is set to 800°C to 1100°C, and duration is 2 hours) and perform aging treatment (for example, the temperature is raised to 480°C to 580°C, and heat is kept for 4 hours) on the sintered billet obtained in step S5 in a heat treatment furnace, to finally obtain a steel structural part with good comprehensive mechanical properties.

Solution treatment is heat treatment in which an alloy (a product obtained after sintering in this application) is heated to a high-temperature single-phase area to maintain a constant temperature, so that excess phases are fully dissolved into a solid solution and then quickly cooled, to obtain a supersaturated solid solution. A purpose of solution treatment is to dissolve a second phase, a γ phase, or the like in the matrix to obtain a uniform supersaturated solid solution. In this way, strengthening phases that have fine particles and are evenly distributed, such as precipitated phases and γ phases may be re-precipitated during aging treatment, and stress caused by cold and hot processing may be eliminated, so that the alloy is recrystallized. For example, in this embodiment of this application, solution treatment may be solution treatment at a temperature of 980°C to 1150°C for 0.5 hours to 4 hours.

Aging treatment is a heat treatment process in which a shape, a size, and properties of a product for which solution treatment is performed in this application change with time when the product is kept at a high temperature or room temperature.

The steel structural part is prepared by using the foregoing method, so that the steel structural part has high strength and high ductility. The steel structural part is not easy to be fractured and deform and has long service life.

An embodiment of this application further provides a steel structural part (not shown in the figure). A material used by the steel structural part includes the foregoing steel. A material used by the steel structure part includes the foregoing steel, so that strength and toughness of the steel structural part are improved. Reliability of the steel structural part does not need to be further ensured by increasing a thickness. This facilitates miniaturization of the steel structural part.

The following further describes this embodiment of this application by using specific embodiments. Embodiments 1 to 5
(1) Prepare alloy powders by using an atomization method, where a particle diameter D50 of the powders is 12 µm, and a total of five groups of different alloy powders are prepared.
(2) Mix the five groups of powders with binders based on a volume ratio of 62:38, and then add the powders and binders to an internal mixer for mixing (temperature: 190°C; duration: 4 hours; blade rotation speed: 20 r/min). Move evenly mixed paste feeds into a granulator. A screw of the granulator extrudes gradually cooled feeds through a die head, and a rotating blade cuts feeds in a stripe shape into cylindrical particles with a length of 2 mm to 3 mm, so that feed particles that can be directly used for molding are obtained. Components of the binder include polyformaldehyde (POM), ethylene vinyl acetate (EVA), polyethylene (PE), microcrystalline wax (CW), and stearic acid (SA), and a ratio by weight of the components is 89: 1 :5:2: 1.
(3) Add the five groups of feed particles to a hopper of an injection molding machine, and perform injection molding at a molding temperature of 220°C and a molding pressure of 200 MPa, to obtain a stretched raw billet.
(4) Horizontally place the stretched raw billet obtained in step (3) on an aluminum oxide ceramic plate, place the plate into a catalytic debinding furnace, and perform catalytic debinding at a specific temperature (the temperature is set to 130°C, a fuming nitric acid flux is 3.5 g/min, and duration is 4 hours).
(5) Put the stretched raw billet for which catalytic debinding is performed in step (4) together with the aluminum oxide ceramic setter plate into a sintering furnace, and perform sintering in Ar, H₂, or vacuum (the temperature is set to 1370°C and duration is 6 hours).
(6) Perform solution treatment on the sintered billet obtained in step (5) in a heat treatment furnace (the temperature is set to 800°C and duration is 2 hours), and cool the sintered billet by oil (put the sintered billet into oil for quick cooling). Then, perform aging treatment (the temperature is raised to 480°C, and the heat is kept for 4 hours) to obtain a steel structural part with good comprehensive mechanical properties. Table 1 shows chemical components of the five types of steel structural parts that are prepared.

**Table 1**

| Embodiment | | Component | | | | | | | | | | Yield Strength MPa | Elongation rate % |
|---|---|---|---|---|---|---|---|---|---|---|---|---|---|
| | O% | C% | Cr% | Ni% | Co% | Mo% | Si% | Mn% | Nb% | B% | Fe% | | |
| 1 | 0.012 | 0.034 | 8.45 | 6.58 | 15.92 | 6.01 | 0.2 | 0.1 | 0.31 | 0.02 | 62.364 | 1920 | 5.52 |
| 2 | 0.003 | 0.046 | 8.43 | 6.51 | 15.5 | 6.02 | 0.2 | 0.12 | 0.29 | 0.01 | 62.871 | 1902 | 4.96 |
| 3 | 0.03 | 0.004 | 8.49 | 6.62 | 15.63 | 5.98 | 0.42 | 0.11 | 0.36 | 0.003 | 62.353 | 1901 | 6.52 |
| 4 | 0.003 | 0.046 | 8.16 | 6.54 | 15.2 | 6.26 | 0.21 | 0.13 | 0.32 | 0 | 63.131 | 1989 | 5 |
| 5 | 0.28 | 0.004 | 8.43 | 6.56 | 15.59 | 5.85 | 0.43 | 0.016 | 0.46 | 0 | 62.38 | 1910 | 4.6 |

It can be learned from Embodiments 1 to 5 that, in this application, a complex product is formed at a time by using the MIM technology with both strength and toughness of the product are considered, so that high strength and a good elongation rate are achieved. An alloy system is strengthened by using formed (Fe, Co, Ni)ₓ Cr_{y}Mo_{z}, (Fe, Co)ₓ Cr_{y}Mo_{Z} phases, and martensite. The foregoing descriptions are merely specific implementations of this application, but are not intended to limit the protection scope of this application. Any variation or replacement readily figured out by a person skilled in the art within the technical scope disclosed in this application shall fall within the protection scope of this application. When no conflict occurs, the implementations of this application and the features in the implementations may be mutually combined. Therefore, the protection scope of this application shall be subject to the protection scope of the claims.

## Claims

1. A steel, comprising:
Fe: with a weight percentage of ≥ 60.67 wt%;
Cr: with a weight percentage of 8.01 wt% to 8.99 wt%;
Ni: with a weight percentage of 6 wt% to 7 wt%;
Co: with a weight percentage of 15.01 wt% to 15.99 wt%;
Mo: with a weight percentage of 5.5 wt% to 6.5 wt%;
Nb: with a weight percentage of ≤ 0.5 wt%;
O: with a weight percentage of ≤ 0.3 wt%; and
C: with a weight percentage of ≤ 0.05 wt%.

2. The steel according to claim 1, wherein the steel further comprises Si, and a weight percentage of Si is ≤ 0.5 wt%.

3. The steel according to claim 1 or 2, wherein the steel further comprises Mn, and a weight percentage of Mn is ≤ 0.5 wt%.

4. The steel according to any one of claims 1 to 3, wherein the steel further comprises B, and a weight percentage of B is ≤ 0.05 wt%.

5. The steel according to any one of claims 1 to 4, wherein a weight percentage of Cr in the steel is 8.2 wt% to 8.8 wt%.

6. The steel according to any one of claims 1 to 5, wherein a weight percentage of Ni in the steel is 6.2 wt% to 6.8 wt%.

7. The steel according to any one of claims 1 to 6, wherein a weight percentage of Co in the steel is 15.2 wt% to 15.8 wt%.

8. The steel according to any one of claims 1 to 7, wherein a weight percentage of Mo in the steel is 5.7 wt% to 6.3 wt%.

9. The steel according to any one of claims 1 to 8, wherein a weight percentage of Nb in the steel is 0.25 wt% to 0.45 wt%.

10. The steel according to any one of claims 1 to 9, wherein a weight percentage of O in the steel is 0.01 wt% to 0.2 wt%.

11. The steel according to any one of claims 1 to 10, wherein a weight percentage of C in the steel is 0.01 wt% to 0.035 wt%.

12. The steel according to any one of claims 1 to 11, wherein the steel further comprises another element, wherein the another element comprises one or more of nitrogen, rhenium, copper, aluminum, titanium, sulfur, phosphorus, hydrogen, zirconium, magnesium, tantalum, calcium, vanadium, zinc, and rare earth metal, and a mass percentage of the another element is ≤ 1%.

13. The steel according to any one of claims 1 to 9, wherein components of the steel comprise: Cr: 8.43 wt%; Ni: 6.51 wt%; Co: 15.5 wt%; Mo: 6.02 wt%; Nb: 0.29 wt%; B: 0.01 wt%; Si: 0.2 wt%; Mn: 0.12 wt%; O: 0.003 wt%; C: 0.046 wt%; and the remaining is Fe.

14. The steel according to any one of claims 1 to 9, wherein components of the steel comprise: Cr: 8.43 wt%; Ni: 6.56 wt%; Co: 15.59 wt%; Mo: 5.85 wt%; Nb: 0.46 wt%; Si: 0.43 wt%; Mn: 0.016 wt%; O: 0.28 wt%; C: 0.046 wt%; and the remaining is Fe.

15. A steel structural part, wherein a material used by the steel structural part comprises the steel according to any one of claims 1 to 14.

16. A steel structural part preparation method, comprising:
providing powders, wherein the powder comprises:
Fe: with a weight percentage of ≥ 60.67 wt%,
Cr: with a weight percentage of 8.01 wt% to 8.99 wt%,
Ni: with a weight percentage of 6 wt% to 7 wt%,
Co: with a weight percentage of 15.01 wt% to 15.99 wt%,
Mo: with a weight percentage of 5.5 wt % to 6.5 wt %, and Nb: with a weight percentage of ≤ 0.5 wt%; and
mixing the powders with binders and molding the powders and binders to a raw billet; sintering the raw billet to form a sintered billet; and performing heat treatment on the sintered billet.

17. The preparation method according to claim 16, wherein the mixing the powders with binders and molding the powders and binders to a raw billet comprises:
mixing the powders and the binders to form paste feeds;
granulating the paste feeds to form feed particles; and
molding the feed particles into the raw billet through injection.

18. The preparation method according to claim 16 or 17, wherein before the sintering the raw billet, the method further comprises debinding the raw billet to remove the binders in the raw billet.

19. The preparation method according to any one of claims 16 to 18, wherein the powder further comprises Si, and a weight percentage of Si is ≤ 0.5 wt%; the powder further comprises Mn, and a weight percentage of Mn is ≤ 0.5 wt%; and the powder further comprises B, and a weight percentage of B is ≤ 0.05 wt%.

20. The preparation method according to any one of claims 16 to 19, wherein the performing heat treatment on the sintered billet comprises: performing solution treatment on the sintered billet; and performing aging treatment on the sintered billet for which solution treatment is performed.

21. A steel structural part, wherein the steel structural part is prepared by using the preparation method according to any one of claims 16 to 20.

22. An electronic device, comprising the steel structural part according to claim 15 or 21.

23. The electronic device according to claim 22, wherein the electronic device further comprises a flexible display and a folding apparatus configured to carry the flexible display, the folding apparatus is configured to drive the flexible display to deform, and the folding apparatus comprises the steel structural part.

24. The electronic device according to claim 23, wherein the folding apparatus comprises a rotating shaft, and the rotating shaft is the steel structural part.
